# EUROPÄISCHE PATENTSCHRIFT

(11) **EP 0 308 589 B1**
(45) Veröffentlichungstag und Bekanntmachung des Hinweises auf die Patenterteilung: **25.08.1993**
(21) Anmeldenummer: 88109890.9
(22) Anmeldetag: 22.06.1988
(51) Int. Cl.: F16K 15/14, F01N 3/34

(54) **Rückschlagventil für die Anordnung in einer Gasleitung**
Check valve for a gas conduit
Clapet anti-retour pour conduite de gaz

(30) Priorität: 19.09.1987 DE 3731594
(43) Veröffentlichungstag der Anmeldung: 29.03.1989
(73) Patentinhaber: PIERBURG GMBH, 41460 Neuss (DE)
(72) Erfinder: Marusiak, Wojciech, D-4000 Düsseldorf (DE); Sari, Osman, D-4048 Grevenbroich 5 (DE); Sommer, Wolfgang, D-4010 Hilden (DE)

(56) Entgegenhaltungen:
- EP-A- 0 053 057
- FR-A- 2 505 968
- GB-A- 2 135 433
- ATZ AUTOMOBILTECHNISCHE ZEITSCHRIFT, Band 84, Nr. 2, Februar 1982, Seiten 93-97, Scwäbisch-Gmünd, DE; W. BOCKELMANN: "Entwicklung und Abstimmung eines antriebslosen Sekundärluftsystems nach dem Pulsorprinzip"

## Beschreibung

Die Erfindung betrifft ein Rückschlagventil nach dem Oberbegriff des Patentspruchs.

Derartige Rückschlagventile werden zur Reduzierung von Schadstoffen im Abgas eingesetzt. Dabei wird von der bekannten Erscheinung Gebrauch gemacht, daß sich der Druck in den Auspuffrohren periodisch ändert, wobei in bestimmten Zeitintervallen im Auspuffrohr unteratmosphärische Drücke auftreten. Zum Einsaugen der Luft werden diese Rückschlagventile (Sekundärluftsaugventile) verwendet, die bei unteratmosphärischem Druck im Auspuff öffnen und bei überatmosphärischem Druck wieder schließen, so daß keine Auspuffgase nach außen entweichen können. Durch die den Auspuffgasen auf diese Weise zugeführte Luft erfolgt in der Auspuffanlage eine Oxydationsreaktion, wodurch eine Reduzierung von Kohlenwasserstoffen (CH) und Kohlenmonoxyd (CO) im Abgas erreicht wird.

Aus der Zeitschrift ATZ 84 (1982) 2, S. 97, Figur 10 ist ein derartiges Rückschlagventil bekannt, das in einem Gehäuse angeordnet ist und Sekundärluft über eine mit Durchbrüchen versehene Ventilsitzplatte, gesteuert von einer Blattfeder, dem Auspuffsystem zuführt. Dabei wird die Blattfeder schwimmend von einem separaten Hubbegrenzer gehalten und geführt. Ventilsitzplatte und Hubbegrenzer werden mit eingelegter Blattfeder vor der Montage in das Ventilgehäuse durch Nietung fixiert, wodurch sehr oft die wegen des geringen Bauvolumens des Ventils äußerst klein dimensionierten Nietzapfen der Hubbegrenzer beim Vernieten mit der Ventilsitzplatte, durch zum Beispiel vorhandene Lunker im Guß, brechen.
Neben der kosten- und zeitintensiven Herstellung und Montage ist somit eine nachfolgende Prüfung erforderlich, um Ausfälle durch defekte Rückschlagventile festzustellen, die sonst, zum Beispiel durch unkontrollierte Abgasrückführung ins Luftfilter, eine Verschlechterung des Fahrverhaltens, Verschmelzen des Luftfilters durch Erhitzung oder sogar einen Filterbrand bewirken könnten.

Hiervon ausgehend liegt der Erfindung die Aufgabe zugrunde, ein Rückschlagventil eingangs genannter Art derart zu gestalten, daß eine einfache Montage ohne Gefährdung der Funktion des Rückschlagventils möglich wird.

Erfindungsgemäß wird diese Aufgabe durch die im Kennzeichen des Patentanspruchs angegebenen Merkmale gelöst.

Das neue Rückschlagventil hat den Vorteil, daß durch Minimierung der Anzahl der Einzelteile und durch deren Umgestaltung derart, daß die Einzelteile ohne Montageaufnahmen und ohne Zwischenmontagen im Ventilgehäuse eingerollt werden können, Fertigungskosten und -zeiten geringer werden bei verbesserter oder zumindest gleichbleibender Qualität.

Ein Ausführungsbeispiel der Erfindung ist in der Zeichnung schematisch dargestellt. Es zeigt:
Fig. 1 einen Schnitt durch ein Rückschlagventil,
Fig. 2 eine Draufsicht auf eine Ventilbegrenzungsplatte.

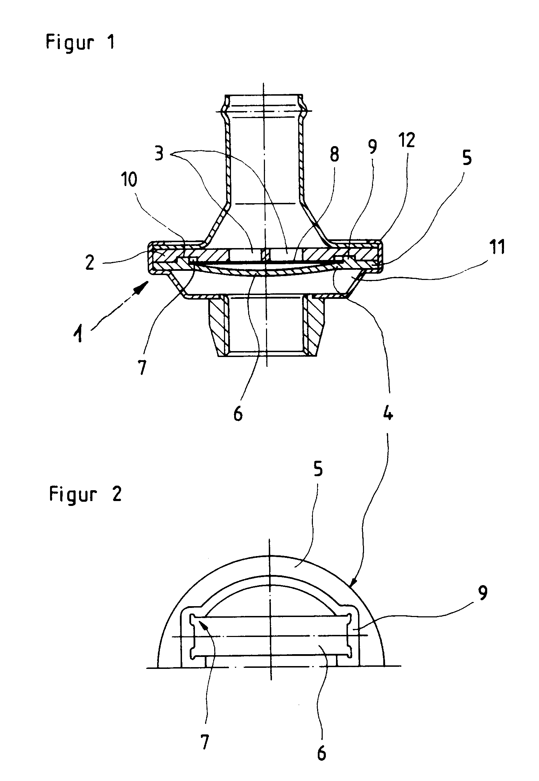

Figur 1 zeigt ein zweiflutiges Rückschlagventil 1, bestehend aus einer Ventilsitzplatte 2 mit Durchbrüchen 3 für das zu steuernde Medium und einer Ventilbegrenzungsplatte 4, die als ein einteiliges Druckgußteil in der Form eines flachen Ringes 5 ausgeführt ist, mit Querverbindungen 6 zur Ventilbegrenzung, auf denen in Vertiefungen 7 je eine Blattfeder 8 als Ventilschließkörper angeordnet ist.
Der Ring 5 weist Erhebungen 9 auf, die in entsprechende Ausnehmungen oder Vertiefungen 10 der Ventilsitzplatte eingreifend ein Zusammenfügen beider Teile in nur einer von zwei möglichen Positionen erlaubt.

Bei der Montage dient ein Ventilgehäuse 11 als Aufnahme für die Ventilbegrenzungsplatte 4, in die die Blattfedern 8 eingelegt werden, und für die Ventilsitzplatte 2, die dann durch Einrollen des oberen Randes (Ventilgehäuseoberkante) 12 des Ventilgehäuses 11 miteinander verbunden werden.

## Patentansprüche

1. Rückschlagventil für die Anordnung in einer Gasleitung, insbesondere zur Sekundärluft-Zuführung in ein Abgassystem einer Brennkraftmaschine, mit einer in einem Ventilgehäuse gehaltenen Ventilsitzplatte, die mit einem Durchbruch oder mehreren Durchbrüchen für das zu steuernde Medium versehen ist, mit mindestens einer Blattfeder (8) als Ventilschließkörper und mit einem Ventilfänger oder mehreren Ventilfängern zur Hubbegrenzung der Blattfeder, dadurch gekennzeichnet, daß der/die Ventilfänger in einer Ventilbegrenzungsplatte (4) angeordnet sind, die so ausgebildet ist, daß sie mit der Ventilsitzplatte (2) bei eingelegter Blattfeder (8) durch zugeordnete Erhebungen (9) und Vertiefungen (10) unverdrehbar zugesammengefügt ist und in das Ventilgehäuse (11) eingelegt durch eine eingerollte Ventilgehäuseoberkante (12) axial gehalten ist.

## Claims

1. Check valve for a gas conduit, in particular for feeding secondary air into an exhaust system of an internal combustion engine, having a valve seat plate which is held in a valve housing and is provided with an opening or a plurality of openings for the medium to be controlled, having at least one leaf spring (8) as valve-closing member and having a valve stop or a plurality of valve stops for limiting the stroke of the leaf spring, characterised in that the valve stop/s is/are arranged in a valve limiting plate (4) which is designed in such a way that, with the leaf spring (8) inserted, it is joined nonrotatably to the valve seat plate (2) by associated raised portions (9) and depressions (10) and, having been inserted into the valve housing (11), is held axially by a rolled-in top edge (12) of the valve housing.

## Revendications

1. Clapet antiretour pour conduite de gaz, en particulier pour l'amenée d'air secondaire dans un système de gaz d'échappement d'un moteur à combustion interne, comprenant une plaquette de siège de soupape maintenue dans une boîte à soupape et munie d'un ou de plusieurs ajours pour le fluide à commander, au moins un ressort à lame (8) servant d'obturateur de soupape et une ou plusieurs cuvettes de soupape pour la limitation de la course du ressort à lame, **caractérisé en ce** que la (les) cuvette(s) de soupape est (sont) disposée(s) dans une plaquette de délimitation (4) de la soupape qui est conformée de telle façon qu'elle est assemblée de manière solidaire en rotation et avec les ressorts à lame (8) en place, avec la plaquette de siège de soupape (2), par des bossages (9) et des creux (10) associés, et qu'elle est insérée dans la boîte à soupape (11) et maintenue axialement par un bord supérieur (12) enroulé de la boîte à soupape.
